# EUROPEAN PATENT SPECIFICATION

(11) **EP 2 949 557 B1**
(45) Date of publication and mention of the grant of the patent: **31.08.2016**
(21) Application number: 14196630.9
(22) Date of filing: 05.12.2014
(51) Int. Cl.: B62J 6/18, B62K 11/04

(54) **Saddle-straddling type motor vehicle**
Grätschsitz-Kraftfahrzeug
Véhicule à moteur de type à selle

(30) Priority: 30.05.2014 JP 2014112934
(43) Date of publication of application: 02.12.2015
(73) Proprietor: Yamaha Hatsudoki Kabushiki Kaisha, Iwata-shi, Shizuoka-ken 438-8501 (JP)
(72) Inventor: Ito, Norimasa, Shizuoka-ken, 438-8501 (JP)
(74) Representative: Zimmermann, Tankred Klaus

(56) References cited:
- JP-U- S60 121 982
- US-A1- 2009 013 953

## Description

### BACKGROUND OF THE INVENTION

### Field of the Invention

The present invention relates to a saddle-straddling type motor vehicle having electrical components.

### Description of Related Art

There is a saddle-straddling type motor vehicle that can acquire supercharging effect by leading air flowing from the front during the travel to an engine through an air cleaner. In such a saddle-straddling type motor vehicle, a duct for leading outside air to the air cleaner is provided.

In a motorcycle described in JP 2010-127076 A, a duct that forms an intake passage is provided to extend in a vehicle front-and-rear direction through an area below an upper bracket and between the pair of fork tubes. In the following description, the duct provided below the upper bracket and between the pair of fork tubes is referred to as a center duct.

Higher supercharging effect can be acquired as an amount of air led to the air cleaner by the center duct is increased. Therefore, it is desirable that a cross section of air flowing in an opening of the center duct and inside the center duct is as large as possible.

On the other hand, various types of handle switches such as a starter switch, a switch for indicating a turn and the like are mounted to a handle as electrical components. A harness is used in order to electrically connect the handle switches and an ECU (Electronic Control Unit).

In a motorcycle described in JP 2009-161011 A, a lead wire connected to a switch unit provided at a steering head passes below an upper bracket and between a pair of fork tubes to extend in the vehicle front-and-rear direction.

US 2009/013953 A1, on which the preamble of claim 1 is based, describes a motorcycle having an air inlet pipe, an airflow
box, an air cleaner box, and a throttle body as an air passage arranged to allow outside air to be taken into the engine. The air inlet pipe is provided in a front portion of a main frame. The air inlet pipe is provided with an airflow sensor and a throttle valve. An air cleaner element is provided between the airflow sensor and the engine.

Another motorcycle is described in JP S60 121982 U.

### BRIEF SUMMARY OF THE INVENTION

An object of the present invention is to provide a saddle-straddling type motor vehicle in which a load applied to a harness can be decreased while supercharging effect is maintained and an increase in size in a width direction and an increase in weight of a front portion of a vehicle are inhibited.

This object is achieved by a saddle-straddling type motor vehicle according to claim 1.

The invention is based on the following findings. In the motorcycle described in JP 2010-127076 A, it is possible to shorten the length of the harness by passing the harness connected to the handle switch below the upper bracket and between the pair of fork tubes.

In this case, however, it is necessary to ensure a space through which the harness passes between the pair of fork tubes in addition to the center duct. On the other hand, it is not desirable to decrease the size of the center duct in order to maintain high supercharging effect. Therefore, when the distance between the pair of fork tubes is increased in order to ensure the space through which the harness passes without a decrease in size of the center duct, the width of a front portion of a vehicle is increased, and the weight is also increased.

Further, the handle switch is rotated about a head pipe by the operation of the handle. Therefore, a load is applied to the harness connected to the handle switch every time the operation of the handle is performed. It is desirable that a load applied to the harness is as small as possible.
(1) A saddle-straddling type motor vehicle according to one aspect of the present invention includes a vehicle main body that includes a head pipe and a body frame extending in a vehicle rearward direction from the head pipe, a first coupling member provided at an upper end of the head pipe to be rotatable with respect to the head pipe, a second coupling member provided at a lower end of the head pipe to be rotatable with respect to the head pipe, a pair of right and left fork tubes supported by the first and second coupling members at positions further outward in a vehicle width direction and further forward in a vehicle front-and-rear direction than the head pipe, a handle provided at the first coupling member, a first electrical component provided at at least one of a left portion and a right portion of the handle, a first harness connected to the first electrical component, an engine provided at the body frame, and an air guide member that is provided between the pair of right and left fork tubes and between the first coupling member and the second coupling member, and is configured to lead air to the engine, the first harness extends from the first electrical component towards a center of the vehicle main body in the vehicle width direction, and passes rearward in the vehicle front-and-rear direction between the air guide member and the first coupling member and between the pair of right and left fork tubes in a front view of the vehicle, and is further led outward in the vehicle width direction, a first portion of the first harness being fixed to the first coupling member between the pair of right and left fork tubes in the vehicle width direction, and a second portion of the first harness being fixed to the vehicle main body at a position further rearward than the pair of right and left fork tubes.
   In the saddle-straddling type motor vehicle, the first harness passes rearward between the air guide member and the first coupling member and between the pair of right and left fork tubes in the front view of the vehicle. Thus, it is not necessary to increase the distance between the pair of right and left fork tubes in order to provide a space through which the first harness passes. Further, it is not necessary to decrease the width of the air guide member in order to provide the space through which the first harness passes. Thus, the supercharging effect is maintained, and an increase in size in the width direction and an increase in weight of the front portion of the vehicle are inhibited.
   The first coupling member, the second coupling member and the pair of right and left fork tubes are rotated about the head pipe according to the operation of the handle by a rider. A space between the air guide member and the first coupling member is close to the head pipe. Therefore, the distance between the first portion of the first harness fixed to the first coupling member and the second portion fixed to the vehicle main body does not largely change due to the operation of the handle. Thus, a load applied to the first harness at the time of the operation of the handle by the rider is decreased.
   As a result, it is possible to decrease a load applied to the harness while the supercharging effect is maintained and an increase in size in the width direction and an increase in weight of the front portion of the vehicle are inhibited.
(2) The saddle-straddling type motor vehicle may further include a second electrical component provided at at least the other one of the left portion and the right portion of the handle such that the second electrical component is positioned on an opposite side of the first electrical component with respect to the center of the vehicle main body in the vehicle width direction, and a second harness connected to the second electrical component, wherein the second harness may extend from the second electrical component towards the center of the vehicle main body in the vehicle width direction, may pass rearward in the vehicle front-and-rear direction between the air guide member and the first coupling member and between the pair of right and left fork tubes in the front view of the vehicle, and may further be led outward in the vehicle width direction, a first portion of the second harness being fixed to the first coupling member between the pair of right and left fork tubes in the vehicle width direction, and a second portion of the second harness being fixed to the vehicle main body at the position further rearward than the pair of right and left fork tubes.
   In this case, the second harness passes rearward between the air guide member and the first coupling member and between the pair of right and left fork tubes in the front view of the vehicle similarly to the first harness. Thus, the supercharging effect is maintained, and an increase in size in the width direction and an increase in weight of the front portion of the vehicle are inhibited.
   Further, similarly to the first harness, the first portion of the second harness is fixed to the first coupling member, and the second portion of the second harness is fixed to the vehicle main body. Thus, a load generated at the second harness at the time of the operation of the handle by the rider is decreased.
   Further, the above-mentioned configuration causes the first and second harnesses to be provided to correspond to the first electrical component provided at one of the left portion and the right portion of the handle and the second electrical component provided at the other one of the left portion and the right portion of the handle, respectively. Thus, the configuration of the front portion of the vehicle is simplified, and assembly and maintenance of the front portion of the vehicle becomes easier.
(3) The second portion of the first harness and the second portion of the second harness may be commonly fixed to one portion of the body frame.
   In this case, mounting work and maintenance of the first and second harnesses become easier.
(4) The second portion of the first harness may be fixed to a first fixing portion of the body frame that is located on an opposite side to the first electrical component with respect to the center of the vehicle main body in the vehicle width direction, and the second portion of the second harness may be fixed to a second fixing portion of the body frame that is located on an opposite side to the second electrical component with respect to the center of the vehicle main body in the vehicle width direction.
   In this case, the first harness passes between the pair of right and left fork tubes from the first electrical component, and is led to the first fixing portion of the body frame that is located on the opposite side to the first electrical component. Thus, the first harness is led outward in the vehicle width direction from the first electrical component without largely curving. Similarly, the second harness passes between the pair of right and left fork tubes from the second electrical component, and is led to the second fixing portion of the body frame that is located on the opposite side to the second electrical component. Thus, the second harness is led outward in the vehicle width direction from the second electrical component without largely curving. As a result, a load generated at the first and second harnesses is more sufficiently decreased.
(5) The saddle-straddling type motor vehicle may further include a key cylinder provided at the first coupling member to be located at a position further forward than upper ends of the pair of right and left fork tubes and between the air guide member and the first coupling member, wherein the key cylinder may be arranged on a same side as the first electrical component with respect to a center of the first coupling member in the vehicle width direction, the first harness may pass in front of the key cylinder from the first electrical component, may pass between a fork tube arranged on a same side as the second electrical component and the key cylinder, and may be led to an area between the pair of right and left fork tubes, the second harness may pass between the fork tube arranged on the same side as the second electrical component and the key cylinder from the second electrical component, may be led to an area between the pair of right and left fork tubes, and the first portion of the first harness and the first portion of the second harness may be commonly fixed to the first coupling member at an inner position of the key cylinder in the vehicle width direction.
   In this case, when the key cylinder is provided at the first coupling member, the first and second harnesses do not pass between the air guide member and the key cylinder. Thus, it is not necessary to ensure a space through which the first and second harnesses pass between the air guide member and the key cylinder. Therefore, an increase in size in the top-and-bottom direction and an increase in weight of the front portion of the vehicle are inhibited.
   When the key cylinder is arranged on the same side as the first electrical component, the inner position of the key cylinder is closer to the head pipe than an outer position of the key cylinder. Therefore, the above-mentioned configuration causes the first portion of the first harness and the first portion of the second harness to be fixed at a position close to the head pipe even when the key cylinder is provided at the first coupling member. Thus, a load generated at the first and second harnesses at the time of the operation of the handle by the rider is decreased.
   Further, because the first portion of the first harness and the first portion of the second harness are commonly fixed, the mounting work of the first and second harnesses becomes easier.
(6) The saddle-straddling motor vehicle may further include a key cylinder provided at the first coupling member to be located at a position further forward than upper ends of the pair of right and left fork tubes between the air guide member and the first coupling member, wherein the key cylinder may be arranged at a center of the first coupling member in the vehicle width direction, the first harness may pass between a fork tube arranged on a same side as the first electrical component and the key cylinder from the first electrical component, may be led to an area between the pair of right and left fork tubes, the second harness may pass between a fork tube arranged on a same side as the second electrical component and the key cylinder from the second electrical component, and may be led to an area between the pair of right and left fork tubes, and the first portion of the first harness and the first portion of the second harness may be commonly fixed to the first coupling member at a position further rearward than the key cylinder.
   In this case, the first and second harnesses do not pass between the key cylinder and the air guide member when the key cylinder is provided at the first coupling member. Thus, it is not necessary to ensure a space through which the first and second harnesses pass between the key cylinder and the air guide member. Therefore, an increase in size in the top-and-bottom direction and an increase in weight of the front portion of the vehicle are inhibited.
   The above-mentioned embodiment causes the first and second harnesses not to pass in front of the key cylinder. Thus, the length of the first and second harnesses can be shortened as compared to a case in which the first and second harnesses pass in front of the key cylinder, respectively. Therefore, an increase in weight of the first and second harnesses can be inhibited.
   Further, because the first portion of the first harness and the first portion of the second harness are commonly fixed, the mounting work of the first and second harnesses becomes easier.
(7) The head pipe may be located at a position further rearward than the pair of right and left fork tubes in a side view of the vehicle, the first harness may pass between one fork tube of the pair of right and left fork tubes and the head pipe from a position between the pair of right and left fork tubes, and may be led outward in the vehicle width direction, and a recess in which a part of the first harness is stored may be formed at the head pipe.
   In this case, a portion of the first harness that extends rearward from the first portion can be led into the recess of the head pipe. Thus, even when the distance between a position at which the first portion of the first harness is fixed and the front end of the head pipe is short, it is not necessary to largely curve the first harness in order to avoid interference between the first harness and the head pipe. Therefore, the mounting work of the first harness becomes easier. Further, a load applied to the first harness can be decreased.
(8) The saddle-straddling type motor vehicle may further include a fixture that is mounted to the first coupling member to fix the first portion of the first harness to the first coupling member.
   In this case, the first portion of the first harness can be easily fixed to the first coupling member by the use of the fixture.

### BRIEF DESCRIPTION OF THE SEVERAL VIEWS OF THE DRAWING

Fig. 1 is a side view showing one side of a motorcycle according to one embodiment of the present invention;
Fig. 2 is a front view of one portion of the motorcycle of Fig. 1 as viewed from the front;
Fig. 3 is a schematic side view of an upper portion of a front end of the motorcycle of Fig. 1 as viewed from a position further leftward than the motorcycle;
Fig. 4 is a schematic cross sectional view of the motorcycle taken along the line Q-Q of Fig. 3;
Fig. 5 is a schematic plan view of an upper end of a front fork as viewed from above;
Fig. 6 is a schematic front view showing one example of the configuration in which first to third sub-harnesses are commonly fixed to an upper bracket;
Fig. 7 is a schematic side view showing one example of the configuration in which the first to third sub-harnesses are commonly fixed to an outer portion of a left main frame;
Fig. 8 is an external perspective view showing a head pipe and a portion of a body frame of Fig. 1;
Fig. 9 is a schematic plan view for explaining the function of a recess formed at the head pipe;
Fig. 10 is a schematic plan view showing another example of the arrangement of the first to third sub-harnesses;
Fig. 11 is a schematic plan view showing another example of the arrangement of a main switch and the first to third sub-harnesses; and
Fig. 12 is a schematic plan view showing yet another example of the arrangement of the main switch and the first to third sub-harnesses.

### DESCRIPTION OF THE PREFERRED EMBODIMENTS

A saddle-straddling type motor vehicle according to one embodiment of the present invention will be described below with reference to drawings. In the following description, a motorcycle will be described as one example of the saddle-straddling type motor vehicle.

### (1) Schematic Configuration of Motorcycle

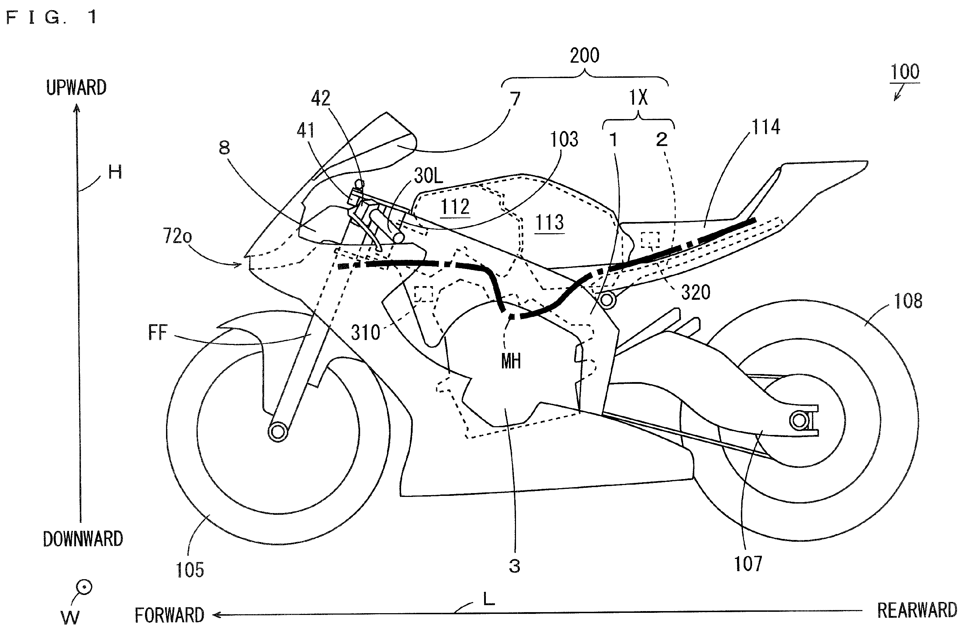

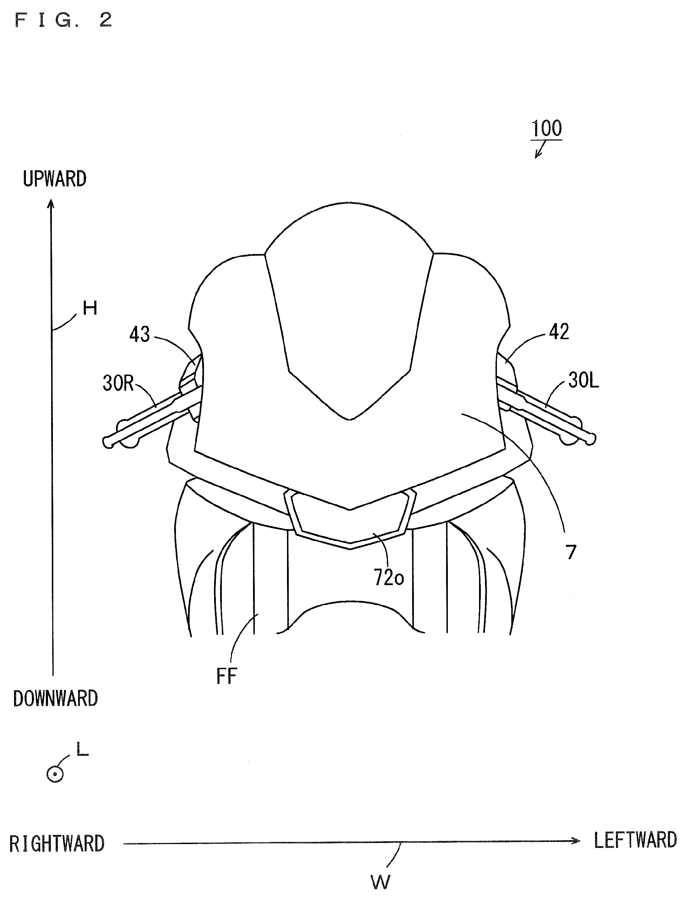

Fig. 1 is a side view of one side of the motorcycle according to one embodiment of the present invention, and Fig. 2 is a front view of a part of the motorcycle 100 of Fig. 1 as viewed from the front. In Figs. 1 and 2, the motorcycle 100 standing up to be perpendicular to the road surface is shown. In Figs. 1, 2, and each of subsequent given diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Fig. 1, the motorcycle 100 includes a head pipe 103 and a body frame 1X. The body frame 1X includes a pair of right and left main frames 1 and a pair of right and left sub-frames 2. The pair of main frames 1 extends obliquely rearward downward from the head pipe 103. The rear ends of the pair of main frames 1 are curved downward. The pair of sub-frames 2 extends rearward from upper portions of the rear ends of the pair of main frames 1.

A duct 8 is provided in front of the head pipe 103. A front fork FF is provided at the head pipe 103 to be swingable rightward and leftward. A front wheel 105 is rotatably supported at the lower end of the front fork FF. A main switch 41 and a pair of right and left handles 30L, 30R are provided at the upper end of the front fork FF.

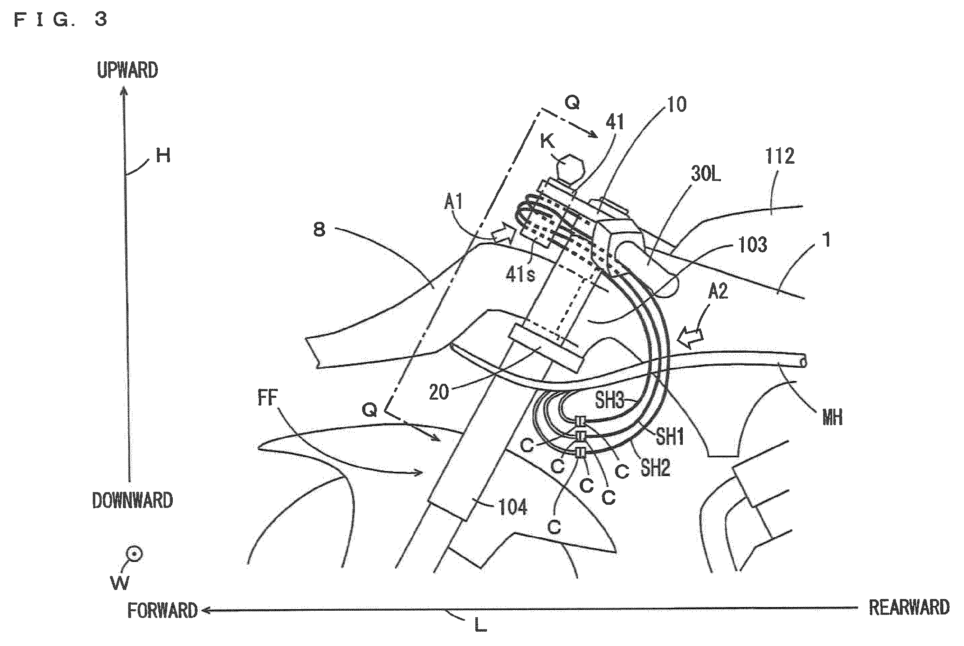

The main switch 41 includes a key cylinder 41s (Fig. 3), described below, and an electronic circuit, and is operated by a rider in order to turn on and off a power supply of the motorcycle 100. The main switch 41 may have a function of an anti-theft device (an immobilizer).

As shown in Fig. 2, a left switch unit 42 is mounted to the left handle 30L. Further, a right switch unit 43 is mounted to the right handle 30R. The left switch unit 42 includes a switch that changes an irradiating direction of a head lamp (not shown) up and down, and a switch that flickers a turn indicator (not shown), for example. The right switch unit 43 includes a starter switch that starts an engine 3, described below, and a switch that lights the head lamp (not shown).

As shown in Fig. 1, the engine 3 is provided at a lower portion of the pair of main frames 1. The engine 3 is supported by the pair of main frames 1. An air cleaner 112 is supported by the pair of main frames 1 at a position further upward than the engine 3. An exhaust port of the air cleaner 112 is connected to an intake port of the engine 3 through an intake pipe and a throttle body (not shown).

A fuel tank 113 is supported by the pair of main frames 1 behind the air cleaner 112. Further, a seat 114 is supported by the pair of sub-frames 2 behind the fuel tank 113. A rear arm 107 is provided to extend rearward from the lower ends of the pair of main frames 1. A rear wheel 108 is rotatably supported at the rear end of the rear arm 107.

As shown in Figs. 1 and 2, a body cover 7 is provided to cover the head pipe 103 from the front and to cover a part of the front fork FF from both sides. The body cover 7 is mounted to the duct 8 and the body frame 1X. In the following description, the body frame 1X and the body cover 7 of the motorcycle 100 are referred to as a vehicle main body 200. The vehicle main body 200 does not swing even when the handles 30L, 30R are operated by the rider. In the vehicle main body 200, an ECU (Electronic Control Unit) 310 and a battery 320 are provided.

An intake opening 72o is formed at a portion of the body cover 7 located in front of the head pipe 103. When the motorcycle 100 is viewed from the front, the intake opening 72o is located at the center of the motorcycle 100 in the width direction W.

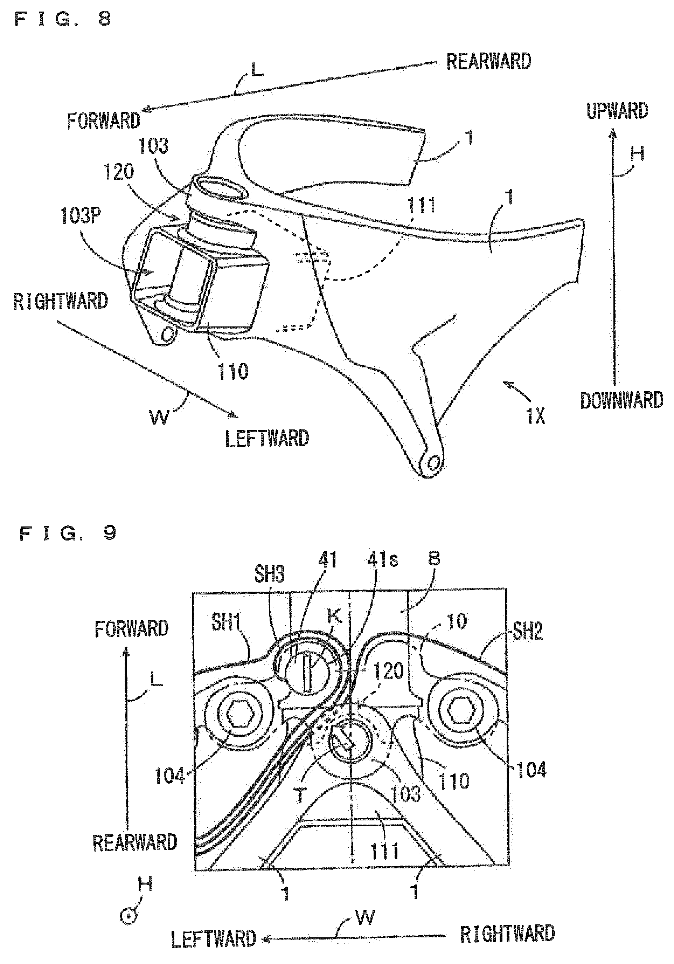

A tip end of the duct 8 is connected to the intake opening 72o of the body cover 7 from behind. During the travelling of the motorcycle 100, air that flows into the duct 8 through the intake opening 72o is led to the engine 3 through an intake passage 103P (Fig. 8), described below, the air cleaner 112, the intake pipe and the throttle body (not shown). Thus, supercharging effect is acquired, and high power output is generated.

The motorcycle 100 includes a plurality of electrical components including the main switch 41, the left switch unit 42, the right switch unit 43, the ECU 310 and the battery 320. The plurality of electrical components are electrically connected to one another. As indicated by the thick one-dot dash line in Fig. 1, in the motorcycle 100 of the present example, a main harness MH for connecting the plurality of electrical components to one another is mounted to the body frame 1X. Each of the plurality of electrical components is connected to the main harness MH by sub-harnesses.

In the present embodiment, the main harness MH and the sub-harnesses are wire harnesses for wiring that include one or a plurality of electrical wires. The wire harnesses are used for transmitting electrical signals among the ECU 310 and other electrical components, or for supplying electrical power of the battery 320 to other electrical components.

In the following description, the sub-harnesses SH connected to the left switch unit 42, the right switch unit 43 and the main switch 41 are referred to as a first sub-harness SH1, a second sub-harness SH2 and a third sub-harness SH3.

In this case, the main switch 41, the ECU 310 and the battery 320 are connected by the third sub-harness SH3 and the main harness MH. The left switch unit 42, the ECU 310 and the battery 320 are connected by the first sub-harness SH1 and the main harness MH. The right switch unit 43, the ECU 310 and the battery 320 are connected by the second sub-harness SH2 and the main harness MH.

### (2) Details of Configuration of Upper Portion of Front End of Motorcycle

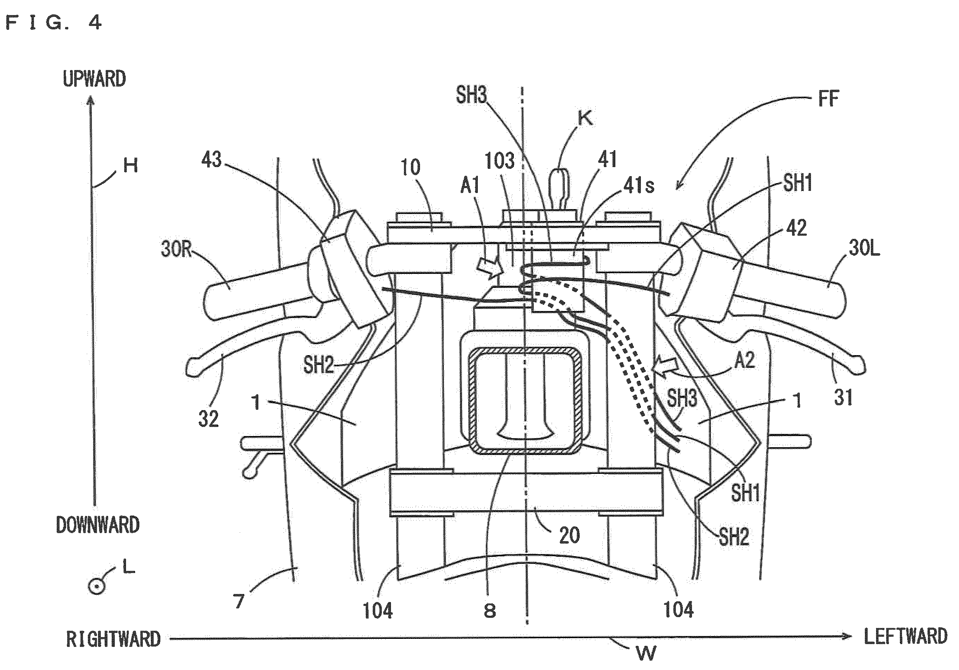

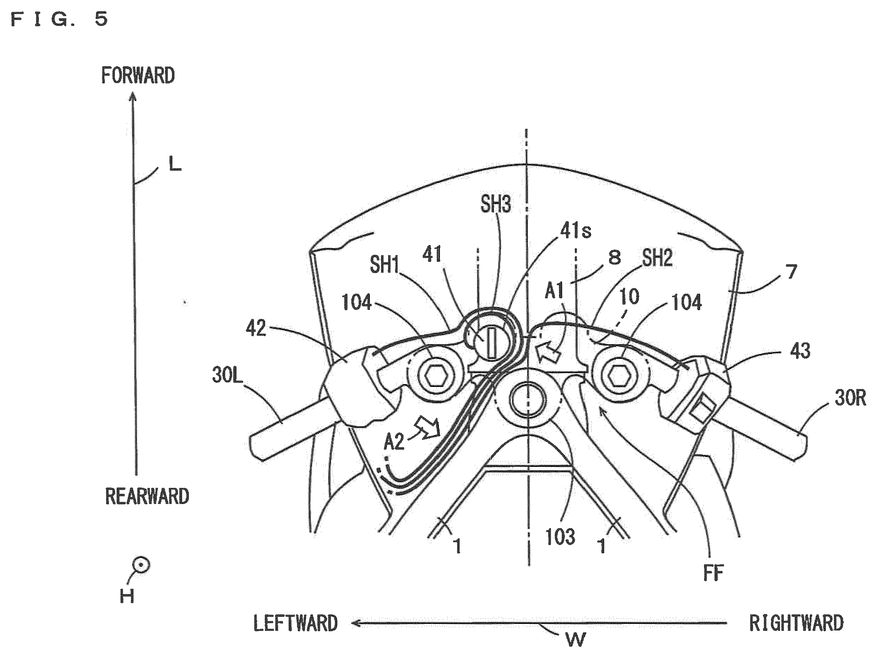

Fig. 3 is a schematic side view of the upper portion of the front end of the motorcycle 100 of Fig. 1 as viewed from a position further leftward than the motorcycle 100. Fig. 4 is a schematic cross sectional view of the motorcycle 100 taken along the line Q-Q of Fig. 3. Fig. 5 is a schematic plan view of the upper end of the front fork FF as viewed from above. In Fig. 3, the body cover 7 is not shown to facilitate understanding of the arrangement of the first sub-harness SH1, the second sub-harness SH2 and the third sub-harness SH3.

First, configuration of the front fork FF will be described. As shown in Figs. 3 and 4, the front fork FF of the present example includes an upper bracket 10, an under bracket 20 and a pair of right and left fork tubes 104.

The upper bracket 10 is a metallic flat plate-shaped member, and is mounted to the upper end of the head pipe 103 to be rotatable with respect to the head pipe 103. The under bracket 20 is mounted to the lower end of the head pipe 103 to be rotatable with respect to the head pipe 103.

The pair of fork tubes 104 is arranged to be parallel to each other to extend obliquely forward downward. The upper bracket 10 couples the upper ends of the pair of fork tubes 104. The under bracket 20 couples the pair of fork tubes 104 at a position further downward than the upper bracket 10. Thus, a rectangular space surrounded by the upper bracket 10, the under bracket 20 and the pair of fork tubes 104 is formed. The pair of fork tubes 104 is located at a position further outward in the width direction W and further forward in the front-and-rear direction L than the head pipe 103.

The duct 8 extends forward from the head pipe 103 to pass through the rectangular space surrounded by the upper bracket 10, the under bracket 20 and the pair of fork tubes 104.

In the present embodiment, the main switch 41 and the pair of handles 30L, 30R are provided at the upper bracket 10. The upper bracket 10 is indicated by the one-dot dash line in Fig. 5.

As shown in Figs. 3 and 4, the main switch 41 includes the key cylinder 41s. A key K is inserted into the key cylinder 41s such that the main switch 41 can be operated. The main switch 41 of the present example is mounted to the upper bracket 10 such that the key cylinder 41 s is located at a position further forward than the pair of fork tubes 104 between the duct 8 and the upper bracket 10. Further, the key cylinder 41s is arranged at a position further leftward than the center of the upper bracket 10 in the width direction W.

As shown in Figs. 4 and 5, one end of the third sub-harness SH3 is connected to a portion of the outer peripheral surface of the key cylinder 41s that is directed leftward. The third sub-harness SH3 passes in front of the key cylinder 41s and extends towards the center of the upper bracket 10 in the width direction W. Further, the third sub-harness SH3 passes between the duct 8 and the upper bracket 10 and between the key cylinder 41s and the right fork tube 104 to be led to an area between the pair of fork tubes 104.

Further, the third sub-harness SH3 passes rearward between the duct 8 and the upper bracket 10 and between the pair of fork tubes 104 to be led to an outer portion of the left main frame 1. As shown in Fig. 3, the other end of the third sub-harness SH3 is connected to the main harness MH via connectors C.

As shown in Figs. 4 and 5, one end of the first sub-harness SH1 is connected to the left switch unit 42 mounted to the left handle 30L. The first sub-harness SH1 passes in front of the key cylinder 41s, and extends towards the center of the upper bracket 10 in the width direction W. Further, the first sub-harness SH1 passes between the duct 8 and the upper bracket 10 and between the key cylinder 41s and the right fork tube 104 to be led to an area between the pair of fork tubes 104.

Further, the first sub-harness SH1 passes rearward between the duct 8 and the upper bracket 10 and between the pair of fork tubes 104 to be led to the outer portion of the left main frame 1. As shown in Fig. 3, the other end of the first sub-harness SH1 is connected to the main harness MH via the connectors C.

As shown in Figs. 4 and 5, one end of the second sub-harness SH2 is connected to the right switch unit 43 mounted to the right handle 30R. The second sub-harness SH2 extends towards the center of the upper bracket 10 in the width direction W. Further, the second sub-harness SH2 passes between the duct 8 and the upper bracket 10 and between the key cylinder 41s and the right fork tube 104 to be led to an area between the pair of fork tubes 104.

Further, the second sub-harness SH2 passes rearward between the duct 8 and the upper bracket 10 and between the pair of fork tubes 104 to be led to the outer portion of the left main frame 1. As shown in Fig. 3, the other end of the second sub-harness SH2 is connected to the main harness MH via the connectors C.

In the present embodiment, as indicated by the outlined arrows A1 in Figs. 3 to 5, the first to third sub-harnesses SH1 to SH3 are commonly fixed to the upper bracket 10 at a position between the key cylinder 41s and the right fork tube 104. Further, as indicated by the outlined arrows A2 in Figs. 3 to 5, the first to third sub-harnesses SH1 to SH3 are commonly fixed to the outer portion of the left main frame 1.

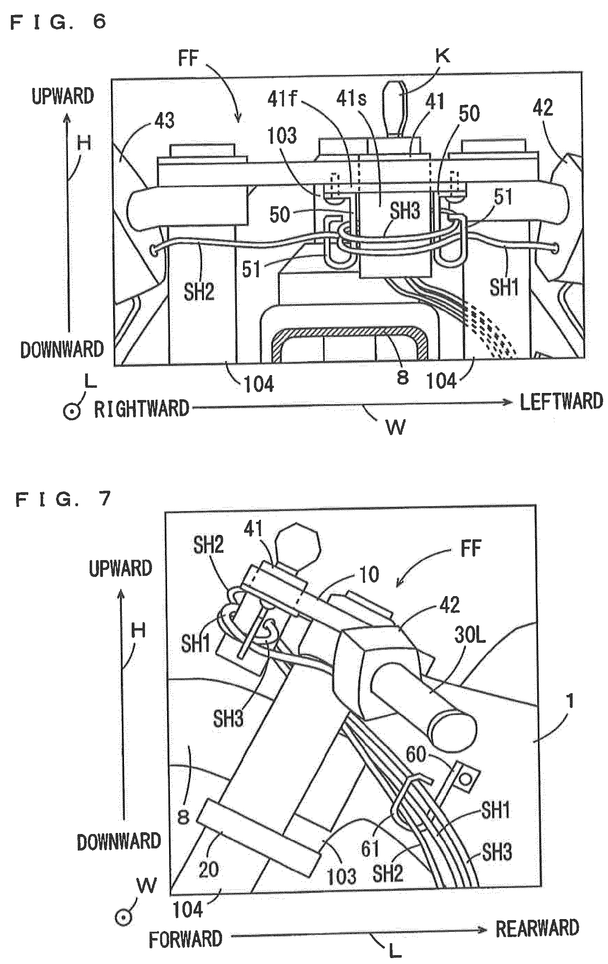

Fig. 6 is a schematic front view showing one example of the configuration in which the first to third sub-harnesses SH1 to SH3 are commonly fixed to the upper bracket 10. As shown in Fig. 6, a flange 41f for fixing the key cylinder 41s to the upper bracket 10 is provided at the key cylinder 41s. A plurality of (two in the present example) through holes (not shown) are formed at the flange 41f. Further, a plurality of (two in the present example) screw holes for screwing the flange 41f are formed at the lower surface of the upper bracket 10.

Two portions of the flange 41f at which the through holes are formed are screwed to the lower surface of the upper bracket 10 together with two catches 50 for holding the harnesses. A hook-shaped harness holder 51 is formed at a lower portion of each catch 50.

The first and third sub-harnesses SH1, SH3 are passed through the harness holder 51 of the catch 50 located at a position further leftward than the key cylinder 41 s. Further, the first to third sub-harnesses SH1 to SH3 are passed through the harness holder 51 of the catch 50 located at a position further rightward than the key cylinder 41s. In this manner, one portion of each of the first to third sub-harnesses SH1 to SH3 is fixed to the upper bracket 10 at a position between the pair of fork tubes 104 in the width direction W in front of the head pipe 103.

Fig. 7 is a schematic side view showing one example of the configuration in which the first to third sub-harnesses SH1 to SH3 are commonly fixed to the outer portion of the left main frame 1. In the left main frame 1, a screw hole is formed at the outer portion to which the first to third sub-harnesses SH1 to SH3 are commonly fixed. Thus, a catch 60 for holding the harnesses is screwed to the outer portion of the left main frame 1 as shown in Fig. 7.

A hook-shaped harness holder 61 is formed at a lower portion of the catch 60 similarly to the catch 50. The first to third sub-harnesses SH1 to SH3, which pass rearward between the pair of fork tubes 104, and extend rearward, are passed through the harness holder 61 of the catch 60 mounted to the left main frame 1. In this manner, other portions of the respective first to third sub-harnesses SH1 to SH3 are commonly fixed to the outer portion of the left main frame 1 behind the pair of fork tubes 104.

As described above, the first to third sub-harnesses SH1 to SH3 are commonly fixed to the upper bracket 10 by the catches 50. Further, the first to third sub-harnesses SH1 to SH3 are commonly fixed to the left main frame 1 by the catch 60 at a position behind the pair of fork tubes 104. Thus, mounting work and maintenance of the first to third sub-harnesses SH1 to SH3 becomes easier.

Further, the first to third sub-harnesses SH1 to SH3 do not pass between the duct 8 and the key cylinder 41s. Thus, it is not necessary to ensure a space through which the first to third sub-harnesses SH1 to SH3 pass between the duct 8 and the key cylinder 41s. Therefore, an increase in size in the top-and-bottom direction and an increase in weight of the front portion of the vehicle are inhibited.

### (3) Shape of Head Pipe

Fig. 8 is an external perspective view showing a part of each of the head pipe 103 and the body frame 1X of Fig 1. As shown in Fig. 8, a square tube-shaped intake guide 110 is mounted to the head pipe 103. The intake guide 110 is provided to open forward and rearward. Further, an intake guide 111 is mounted behind the head pipe 103 to communicate with the intake guide 110. The intake passage 103P that leads air rearward from an area in front of the head pipe 103 is formed by the intake guides 110, 111.

The rear end of the duct 8 of Fig. 1 is connected to the intake guide 110. Further, an intake port of the air cleaner 112 of Fig. 1 is connected to the intake guide 111. Thus, air flowing into the duct 8 is smoothly led to the air cleaner 112 through the intake passage 103P.

A recess 120 that extends in a circumferential direction is formed at a front-half portion of the outer peripheral surface of the head pipe 103 above the intake guide 110. Fig. 9 is a schematic plan view for explaining the function of the recess 120 formed at the head pipe 103. Also in Fig. 9, the upper bracket 10 is indicated by the one-dot dash line similarly to Fig. 5.

In the present embodiment, the first to third sub-harnesses SH1 to SH3 are fixed to the upper bracket 10 at the position between the key cylinder 41s and the right fork tube 104. Therefore, the distance in the front-and-rear direction L between the position at which the first to third sub-harnesses SH1 to SH3 are fixed to the upper bracket 10 and the head pipe 103 is markedly decreased.

Even in such a case, because the recess 120 is formed at the head pipe 103 of the present example, at least a part of the first to third sub-harnesses SH1 to SH3 is led into the recess 120 as indicated by the outlined arrow T in Fig. 9. Thus, it is not necessary to largely curve the first to third sub-harnesses SH1 to SH3 in order to avoid interference between the first to third sub-harnesses SH1 to SH3 and the head pipe 103. Therefore, the mounting work of the first to third sub-harnesses SH1 to SH3 becomes easier. Further, a load applied to the first to third sub-harnesses SH1 to SH3 can be decreased.

While the recess 120 is formed at the head pipe 103 of the present example as described above, the recess 120 does not necessarily have to be formed. For example, when the distance from the position at which the first to third sub-harnesses SH1 to SH3 are fixed to the upper bracket 10 to the head pipe 103 is sufficiently large, it is not necessary to largely curve the first to third sub-harnesses SH1 to SH3. In this case, it is possible to simplify the configuration of the head pipe 103 by not forming the recess 120.

### (4) Effects

As described above, the first to third sub-harnesses SH1 to SH3 extend rearward to pass between the duct 8 and the upper bracket 10 and between the pair of fork tubes 104. Thus, it is not necessary to increase the distance between the pair of fork tubes 104 in order to provide a space through which the first to third sub-harnesses SH1 to SH3 pass. Further, it is not necessary to decrease the width of the duct 8 in order to provide the space through which the first to third sub-harnesses SH1 to SH3 pass. Thus, supercharging effect is maintained, and an increase in size in the width direction W and an increase in weight of the front portion of the vehicle are inhibited.

The front fork FF is rotated about the head pipe 103 according to the operation of the handles 30L, 30R by the rider. The space between the duct 8 and the upper bracket 10 is close to the head pipe 103.

Therefore, the distance between the one portion of each of the first to third sub-harnesses SH1 to SH3 fixed to the upper bracket 10 and another portion of each of the first to third sub-harnesses SH1 to SH3 fixed to the outer portion of the left main frame 1 does not largely change due to the operation of the handles 30L, 30R. Thus, a load applied to the first to third sub-harnesses SH1 to SH3 at the time of the operation of the handles 30L, 30R by the rider is decreased.

As a result, it is possible to decrease a load applied to the first to third sub-harnesses SH1 to SH3 while maintaining the supercharging effect and inhibiting an increase in size in the width direction W and an increase in weight of the front portion of the vehicle.

In the above-mentioned example, an inner position of the key cylinder 41s is closer to the head pipe 103 than an outer position of the key cylinder 41s. Therefore, even when the key cylinder 41s is provided at the upper bracket 10, the first to third sub-harnesses SH1 to SH3 are fixed at a position close to the head pipe. Thus, a load generated at the first to third sub-harnesses SH1 to SH3 at the time of the operation of the handles 30L, 30R by the rider is decreased.

### (5) Other Embodiments

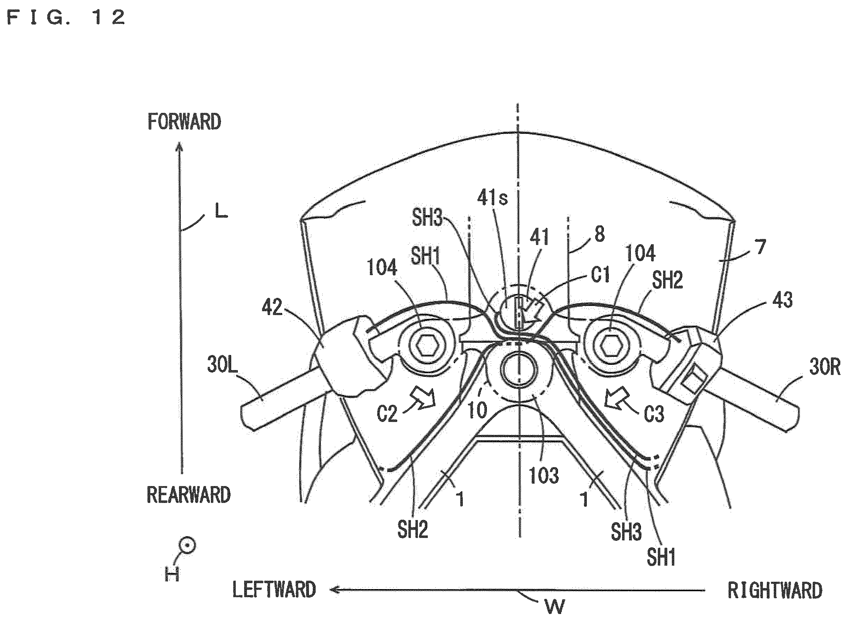

(5-1) In the above-mentioned embodiment, one portion of the third sub-harness SH3, one portion of the first sub-harness SH1, and one portion of the second sub-harness SH2 are commonly fixed to the upper bracket 10, and other portions of the respective first to third sub-harnesses SH1 to SH3 are commonly fixed to the outer position of the left main frame 1. The arrangement of the first to third sub-harnesses SH1 to SH3 is not limited to the above-mentioned example.

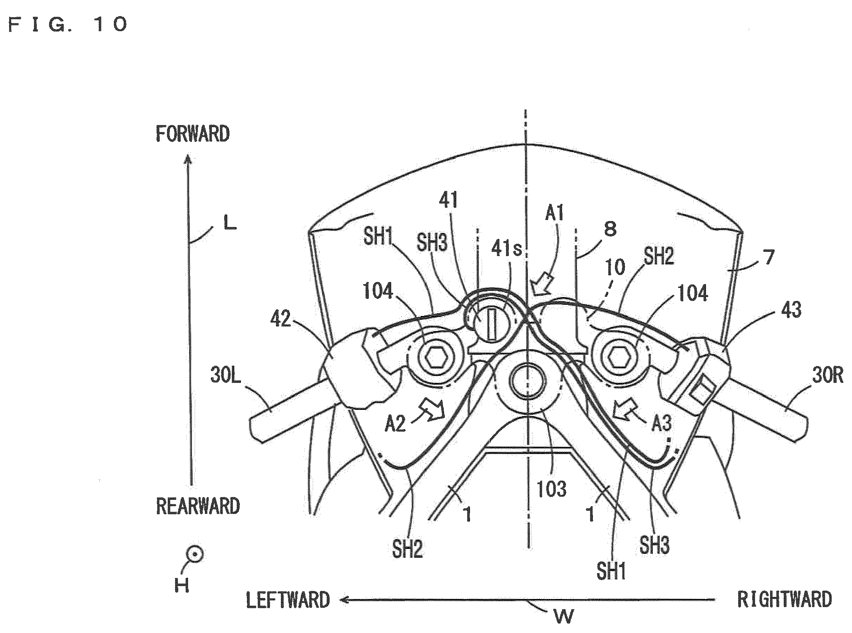

   Fig. 10 is a schematic plan view showing another example of the arrangement of the first to third sub-harnesses SH1 to SH3. In Fig. 10, the upper bracket 10 is indicated by the one-dot dash line. In the present example, the arrangement of the first to third sub-harnesses SH1 to SH3 is different from the example of Figs. 3 to 5 in the following points.
   As shown in Fig. 10, in the present example, the first and third sub-harnesses SH1, SH3 connected to the main switch 41 and the left switch unit 42, respectively, pass rearward between the pair of fork tubes 104 to be led to an outer portion of the right main frame 1.
   As indicated by the outlined arrow A3 in Fig. 10, other portions of the respective first and third sub-harnesses SH1, SH3 are commonly fixed to an outer position of the right main frame 1. In this case, the first and third sub-harnesses SH1, SH3 extend from a position further leftward than the center of the upper bracket 10 in the width direction W to the outer position of the right main frame 1. Therefore, it is not necessary to largely curve the first and third sub-harnesses SH1, SH3 at a position in the vicinity of the pair of fork tubes 104.
   Further, the second sub-harness SH2 connected to the right switch unit 43 passes rearward between the pair of fork tubes 104 to be led to the outer portion of the left main frame 1. As indicated by the outlined arrow A2 in Fig. 10, another portion of the second sub-harness SH2 is fixed at an outer position of the left main frame 1. In this case, the second sub-harness SH2 extends from a position further rightward than the center of the upper bracket 10 in the width direction W to the outer position of the left main frame 1. Therefore, it is not necessary to largely curve the second sub-harness SH2 at a position in the vicinity of the pair of fork tubes 104.
   As a result, a load generated at the first to third sub-harnesses SH1 to SH3 can be more sufficiently decreased.
(5-2) While the key cylinder 41 s of the main switch 41 is arranged at a position further leftward than the center of the upper bracket 10 in the width direction W in the above-mentioned embodiment, the arrangement of the key cylinder 41s is not limited to the above-mentioned example.

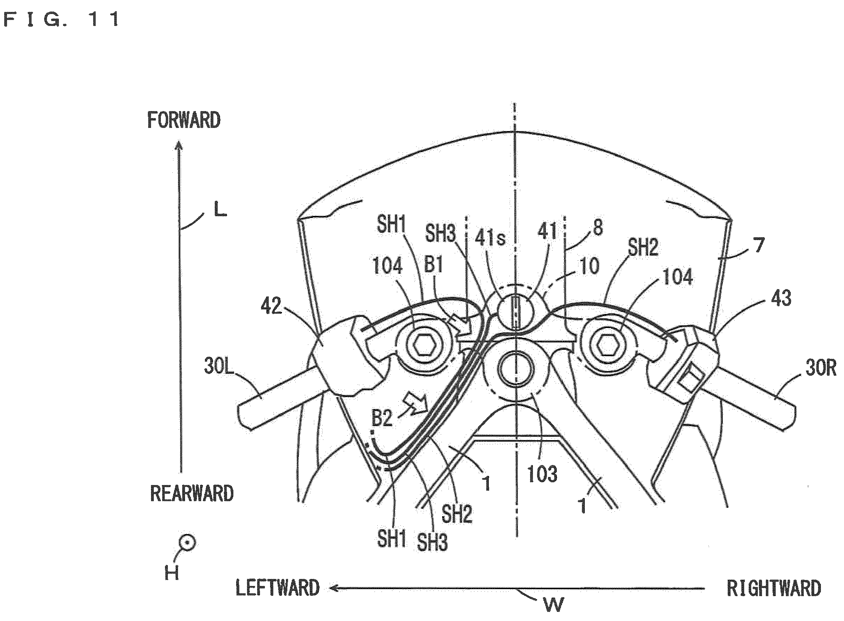

   Fig. 11 is a schematic plan view showing another example of the arrangement of the main switch 41 and the first to third sub-harnesses SH1 to SH3. In Fig. 11, the upper bracket 10 is indicated by the one-dot dash line. In the present example, the arrangement of the main switch 41 and the first to third sub-harnesses SH1 to SH3 is different from the example of Figs. 3 to 5 in the following points.
   As shown in Fig. 11, in the present example, the key cylinder 41s of the main switch 41 is arranged at a position further forward than the upper ends of the pair of fork tubes 104 and the center of the upper bracket 10 in the width direction W.
   The third sub-harness SH3 passes rearward between the key cylinder 41s and the left fork tube 104 to be led to an area between the pair of fork tubes 104. Further, the third sub-harness SH3 passes rearward between the duct 8 and the upper bracket 10 and between the pair of fork tubes 104 to be led to an outer portion of the left main frame 1.
   The first sub-harness SH1 extends from the left switch unit 42 towards the center of the upper bracket 10 in the width direction W, and passes rearward between the key cylinder 41s and the left fork tube 104 to be led to an area between the pair of fork tubes 104. Further, the first sub-harness SH1 passes rearward between the duct 8 and the upper bracket 10 and between the pair of fork tubes 104 to be led to the outer portion of the left main frame 1.
   The second sub-harness SH2 extends from the right switch unit 43 towards the center of the upper bracket 10 in the width direction W, and passes rearward between the key cylinder 41s and the right fork tube 104 to be led to an area between the pair of fork tubes 104. Further, the second sub-harness SH2 passes rearward between the pair of fork tubes 104 to be led to the outer portion of the left main frame 1.
   The first to third sub-harnesses SH1 to SH3 are commonly fixed to the upper bracket 10 at a position between the head pipe 103 and the left fork tube 104 as indicated by the outlined arrow B1 in Fig. 11. Further, the first to third sub-harnesses SH1 to SH3 are commonly fixed to the outer portion of the left main frame 1 as indicated by the outlined arrow B2 in Fig. 11.
   In the present example, any one of the first to third sub-harnesses SH1 to SH3 does not pass in front of the key cylinder 41s. Thus, the length of the first to third sub-harnesses SH1 to SH3 can be shortened. As a result, the weight of the first to third sub-harnesses SH1 to SH3 can be decreased.
(5-3) Fig. 12 is a schematic plan view showing yet another example of the arrangement of the main switch 41 and the first to third sub-harnesses SH1 to SH3. In Fig. 12, the upper bracket 10 is indicated by the one dot-dash line.
   Similarly to the example of Fig. 11, also in the present example, the key cylinder 41s of the main switch 41 is arranged at the position further forward than the upper ends of the pair of fork tubes 104, and the center of the upper bracket 10 in the width direction W. In the present example, the arrangement of the first to third sub-harnesses SH1 to SH3 is different from the example of Fig. 11 in the following points.
   The first and third sub-harnesses SH1, SH3 pass rearward between the key cylinder 41s and the left fork tube 104 to be led to an area between the pair of fork tubes 104. Further, the first and third sub-harnesses SH1, SH3 pass rearward between the pair of fork tubes 104 to be led to an outer portion of the right main frame 1.
   On the other hand, the second sub-harness SH2 passes rearward between the key cylinder 41s and the right fork tube 104 to be led to an area between the pair of fork tubes 104. Further, the second sub-harness SH2 passes rearward between the pair of fork tubes 104 to be led to the outer portion of the left main frame 1.
   As indicated by the outlined arrow C1 in Fig. 12, one portion of the third sub-harness SH3, one portion of the first sub-harness SH1, and one portion of the second sub-harness SH2 are commonly fixed to the upper bracket 10 between the key cylinder 41s and the head pipe 103.
   Further, as indicated by the outlined arrow C3 in Fig. 12, other portions of the respective first and third sub-harnesses SH1, SH3 are commonly fixed to the outer portion of the right main frame 1. In this case, the first and third sub-harnesses SH1, SH3 extend from a position further leftward than the center of the upper bracket 10 in the width direction W to an outer position of the right main frame 1. Therefore, it is not necessary to largely curve the first and third sub-harnesses SH1, SH3 at a position in the vicinity of the pair of fork tubes 104.
   Further, as indicated by the outlined arrow C2 in Fig. 12, another portion of the second sub-harness SH2 is fixed to an outer portion of the left main frame 1. In this case, the second sub-harness SH2 extends from a position further rightward than the center of the upper bracket 10 in the width direction W to an outer position of the left main frame 1. Therefore, it is not necessary to largely curve the second sub-harness SH2 at a position in the vicinity of the pair of fork tubes 104.
   As a result, a load generated at the first to third sub-harnesses SH1 to SH3 can be more sufficiently decreased.
(5-4) While the pair of handles 30L, 30R separated from each other is mounted to the upper bracket 10, respectively, in the above-mentioned embodiment, the invention is not limited to the above-mentioned example. The pair of handles 30L, 30R may be integrally formed by one tubular member.
(5-5) While the first to third sub-harnesses SH1 to SH3 are fixed to the upper bracket 10 and the main frame 1 by the catches 50, 60 in the above-mentioned embodiment, the invention is not limited to the above-mentioned embodiment. The first to third sub-harnesses SH1 to SH3 may be fixed to the upper bracket 10 and the body frame 1X by a clamping band made of resin, a wire or the like instead of the catches 50, 60.
(5-6) While other portions of the respective first to third sub-harnesses SH1 to SH3 are fixed to any one of the pair of main frames 1 in the above-mentioned embodiment, the invention is not limited to this. Other portions of the respective first to third sub-harnesses SH1 to SH3 may be fixed to any portion in the body cover 7 instead of the pair of main frames 1. Alternatively, other portions of the respective first to third sub-harnesses SH1 to SH3 may be fixed to any portion in the pair of sub-frames 2 instead of the pair of main frames 1.
(5-7) While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.
(6) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a saddle-straddling type motor vehicle, the head pipe 103 is an example of a head pipe, the body frame 1X is an example of a body frame, the vehicle main body 200 is an example of a vehicle main body, the upper bracket 10 is an example of a first coupling member, the under bracket 20 is an example of a second coupling member and the pair of right and left fork tubes 104 is an example of a pair of right and left fork tubes.

Further, the pair of right and left handles 30L, 30R is an example of a handle, the handle 30L is an example of a left portion of the handle, the handle 30R is an example of a right portion of the handle, the left switch unit 42 or the right switch unit 43 is an example of a first electrical component, the first sub-harness SH1 or the second sub-harness SH2 is an example of a first harness, the engine 3 is an example of an engine, and the duct 8 is an example of an air guide member.

Further, one portion of the first or third sub-harness SH1, SH3 fixed to the upper bracket 10 is an example of a first portion of the first harness, another portion of the first or third sub-harness SH1, SH3 fixed to the body frame 1X is an example of a second portion of the first harness.

Further, the right switch unit 43 or the left switch unit 42 is an example of a second electrical component, the second sub-harness SH2 or the first sub-harness SH1 is an example of a second harness, one portion of the first or second sub-harness SH1, SH2 fixed to the upper bracket 10 is an example of a first portion of the second harness, and another portion of the first or second sub-harness SH1, SH2 fixed to the body frame 1X is an example of a second portion of the second harness.

Further, the portion of the left main frame 1 indicated by the outlined arrow A2 of Fig. 5 and the outlined arrow B2 of Fig. 11 is an example of a portion of the body frame, the portion of the right main frame 1 indicated by the outlined arrow A3 of Fig. 10 and the outlined arrow C3 of Fig. 12, or the portion of the left main frame 1 indicated by the outlined arrow A2 of Fig. 10 and the outlined arrow C2 of Fig. 12 is an example of a first fixing portion of the body frame.

Further, the portion of the left main frame 1 indicated by the outlined arrow A2 of Fig. 10 and the outlined arrow C2 of Fig. 12, or the portion of the right main frame 1 indicated by the outlined arrow A3 of Fig. 10 and the outlined arrow C3 of Fig. 12 is an example of a second fixing portion of the body frame, the key cylinder 41s is an example of a key cylinder, the recess 120 is an example of a recess, and the catch 50 is an example of a fixture.

As each of constituent elements recited in the claims, various other elements having configurations or functions described in the claims can be also used.

### INDUSTRIAL APPLICABILITY

The present invention can be effectively utilized for various saddle-straddling type motor vehicles including electrical components.

## Claims

1. A saddle-straddling type motor vehicle comprising:
a vehicle main body (200) that includes a head pipe (103) and a body frame (1X) extending in a vehicle rearward direction from the head pipe (103);
a first coupling member (10) provided at an upper end of the head pipe (103) to be rotatable with respect to the head pipe (103);
a second coupling member (20) provided at a lower end of the head pipe (103) to be rotatable with respect to the head pipe (103);
a pair of right and left fork tubes (104) supported by the first and second coupling members (10, 20) at positions further outward in a vehicle width direction and further forward in a vehicle front-and-rear direction than the head pipe (103);
a handle (30L, 30R) provided at the first coupling member (10);
a first electrical component (42) provided at at least one of a left portion and a right portion of the handle (30L, 30R);
a first harness (SH1) connected to the first electrical component (42);
an engine (3) provided at the body frame (1X); and
an air guide member (8) that is provided between the pair of right and left fork tubes (104) and between the first coupling member (10) and the second coupling member (20), and is configured to lead air to the engine (3);
**characterized in that**
the first harness (SH1) extends from the first electrical component (42) towards a center of the vehicle main body (200) in the vehicle width direction, passes rearward in the vehicle front-and-rear direction between the air guide member (8) and the first coupling member (10) and between the pair of right and left fork tubes (104) in a front view of the vehicle, and is further led outward in the vehicle width direction, a first portion of the first harness (SH1) being fixed to the first coupling member (10) between the pair of right and left fork tubes (104) in the vehicle width direction, and a second portion of the first harness (SH1) being fixed to the vehicle main body (200) at a position further rearward than the pair of right and left fork tubes (104).

2. The saddle-straddling type motor vehicle according to claim 1, further comprising:
a second electrical component (43) provided at at least the other one of the left portion and the right portion of the handle (30L, 30R) such that the second electrical component (43) is positioned on an opposite side of the first electrical component (42) with respect to the center of the vehicle main body (200) in the vehicle width direction; and
a second harness (SH2) connected to the second electrical component (43),
wherein
the second harness (SH2) extends from the second electrical component (43) towards the center of the vehicle main body (200) in the vehicle width direction, passes rearward in the vehicle front-and-rear direction between the air guide member (8) and the first coupling member (10) and between the pair of right and left fork tubes (104) in the front view of the vehicle, and is further led outward in the vehicle width direction, a first portion of the second harness (SH2) being fixed to the first coupling member (10) between the pair of right and left fork tubes (104) in the vehicle width direction, and a second portion of the second harness (SH2) being fixed to the vehicle main body (200) at the position further rearward than the pair of right and left fork tubes (104).

3. The saddle-straddling type motor vehicle according to claim 2, wherein the second portion of the first harness (SH1) and the second portion of the second harness (SH2) are commonly fixed to one portion of the body frame (1X).

4. The saddle-straddling type motor vehicle according to claim 2, wherein the second portion of the first harness (SH1) is fixed to a first fixing portion of the body frame (1X) that is located on an opposite side to the first electrical component (42) with respect to the center of the vehicle main body (200) in the vehicle width direction, and
the second portion of the second harness (SH2) is fixed to a second fixing portion of the body frame (1X) that is located on an opposite side to the second electrical component (43) with respect to the center of the vehicle main body (200) in the vehicle width direction.

5. The saddle-straddling type motor vehicle according to any one of claims 2 to 4, further comprising:
a key cylinder (41s) provided at the first coupling member (10) to be located at a position further forward than upper ends of the pair of right and left fork tubes (104) and between the air guide member (8) and the first coupling member (10), wherein
the key cylinder (41s) is arranged on a same side as the first electrical component (42) with respect to a center of the first coupling member (10) in the vehicle width direction,
the first harness (SH1) passes in front of the key cylinder (41s) from the first electrical component (42), and passes between a fork tube (104) arranged on a same side as the second electrical component (43) and the key cylinder (41s), and is led to an area between the pair of right and left fork tubes (104),
the second harness (SH2) passes between the fork tube (104) arranged on the same side as the second electrical component (43) and the key cylinder (41 s) from the second electrical component (43), and is led to an area between the pair of right and left fork tubes (104), and
the first portion of the first harness (SH1) and the first portion of the second harness (SH2) are commonly fixed to the first coupling member (10) at an inner position of the key cylinder (41 s) in the vehicle width direction.

6. The saddle-straddling motor vehicle according to any one of claims 2 to 4, further comprising:
a key cylinder (41 s) provided at the first coupling member (10) to be located at a position further forward than upper ends of the pair of right and left fork tubes (104) between the air guide member (8) and the first coupling member (10), wherein
the key cylinder (41 s) is arranged at a center of the first coupling member (10) in the vehicle width direction,
the first harness (SH1) passes between a fork tube (104) arranged on a same side as the first electrical component (42) and the key cylinder (41s) from the first electrical component (42), and is led to an area between the pair of right and left fork tubes (104),
the second harness (SH2) passes between a fork tube (104) arranged on a same side as the second electrical component (43) and the key cylinder (41s) from the second electrical component(43), and is led to an area between the pair of right and left fork tubes (104), and
the first portion of the first harness (SH1) and the first portion of the second harness (SH2) are commonly fixed to the first coupling member (10) at a position further rearward than the key cylinder (41 s).

7. The saddle-straddling type motor vehicle according to any one of claims 1 to 6, wherein
the head pipe (103) is located at a position further rearward than the pair of right and left fork tubes (104) in a side view of the vehicle,
the first harness (SH1) passes between one fork tube (104) of the pair of right and left fork tubes (104) and the head pipe (103) from a position between the pair of right and left fork tubes (104), and is led outward in the vehicle width direction, and
a recess (120) in which a part of the first harness (SH1) is stored is formed at the head pipe (103).

8. The saddle-straddling type motor vehicle according to any one of claims 1 to 7, further comprising a fixture (50) that is mounted to the first coupling member (10) to fix the first portion of the first harness (SH1) to the first coupling member (10).

## Patentansprüche

1. Ein Sattel-Grätsch-Typ-Kraftfahrzeug, das folgende Merkmale aufweist:
einen Fahrzeughauptkörper (200), der ein Kopfrohr (103) und einen Körperrahmen (1X) beinhaltet, der sich in einer Fahrzeugrückwärtsrichtung von dem Kopfrohr (103) erstreckt;
ein erstes Kopplungsbauteil (10), das an einem oberen Ende des Kopfrohrs (103) vorgesehen und in Bezug auf das Kopfrohr (103) drehbar ist;
ein zweites Kopplungsbauteil (20), das an einem unteren Ende des Kopfrohrs (103) vorgesehen und in Bezug auf das Kopfrohr (103) drehbar ist;
ein Paar aus rechtem und linkem Gabelrohr (104), die in einer Fahrzeugbreitenrichtung an weiter außen und in einer Vorne-Hinten-Richtung des Fahrzeugs an weiter vorne gelegenen Positionen als das Kopfrohr (103) durch das erste und das zweite Kopplungsbauteil (10, 20) getragen werden;
einen Griff (30L, 30R), der an dem ersten Kopplungsbauteil (10) vorgesehen ist;
eine erste elektrische Komponente (42), die an zumindest einem eines linken Abschnitts und eines rechten Abschnitts des Griffs (30L, 30R) vorgesehen ist;
einen ersten Kabelbaum (SH1), der mit der ersten elektrischen Komponente (42) verbunden ist;
einen Motor (3), der an dem Körperrahmen (1X) vorgesehen ist; und
ein Luftführbauteil (8), das zwischen dem Paar aus rechtem und linkem Gabelrohr (104) und zwischen dem ersten Kopplungsbauteil (10) und dem zweiten Kopplungsbauteil (20) vorgesehen und ausgebildet ist, um Luft zu dem Motor (3) zu leiten;
**dadurch gekennzeichnet, dass**:
der erste Kabelbaum (SH1) sich von der ersten elektrischen Komponente (42) in der Fahrzeugbreitenrichtung in Richtung einer Mitte des Fahrzeughauptkörpers (200) erstreckt, in der Vorne-Hinten-Richtung des Fahrzeugs zwischen dem Luftführbauteil (8) und dem ersten Kopplungsbauteil (10) und in einer Vorderansicht des Fahrzeugs zwischen dem Paar aus rechtem und linkem Gabelrohr (104) nach hinten verläuft, und ferner in der Fahrzeugbreitenrichtung nach außen geführt ist, wobei ein erster Abschnitt des ersten Kabelbaums (SH1) in der Fahrzeugbreitenrichtung zwischen dem Paar aus rechtem und linkem Gabelrohr (104) an dem ersten Kopplungsbauteil (10) fixiert ist und ein zweiter Abschnitt des ersten Kabelbaums (SH1) an einem Fahrzeughauptkörper (200) an einer Position weiter hinten als das Paar aus rechtem und linkem Gabelrohr (104) fixiert ist.

2. Das Sattel-Grätsch-Typ-Kraftfahrzeug gemäß Anspruch 1, das ferner folgende Merkmale aufweist:
eine zweite elektrische Komponente (43), die an zumindest dem anderen des linken Abschnitts und des rechten Abschnitts des Griffs (30L, 30R) derart vorgesehen ist, dass die zweite elektrische Komponente (43) in der Fahrzeugbreitenrichtung in Bezug auf die Mitte des Fahrzeughauptkörpers (200) an einer gegenüberliegenden Seite der ersten elektrischen Komponente (42) positioniert ist; und
einen zweiten Kabelbaum (SH2), der mit der zweiten elektrischen Komponente (43) verbunden ist, wobei:
der zweite Kabelbaum (SH2) sich von der zweiten elektrischen Komponente (43) in der Fahrzeugbreitenrichtung in Richtung der Mitte des Fahrzeughauptkörpers (200) erstreckt, in der Vorne-Hinten-Richtung des Fahrzeugs zwischen dem Luftführbauteil (8) und dem ersten Kopplungsbauteil (10) und in der Vorderansicht des Fahrzeugs zwischen dem Paar aus rechtem und linkem Gabelrohr (104) nach hinten verläuft, und ferner in der Fahrzeugbreitenrichtung nach außen geführt ist, wobei ein erster Abschnitt des zweiten Kabelbaums (SH2) in der Fahrzeugbreitenrichtung zwischen dem Paar aus rechtem und linkem Gabelrohr (104) an dem ersten Kopplungsbauteil (10) fixiert ist und ein zweiter Abschnitt des zweiten Kabelbaums (SH2) an dem Fahrzeughauptkörper (200) an der Position weiter hinten als das Paar aus rechtem und linkem Gabelrohr (104) fixiert ist.

3. Das Sattel-Grätsch-Typ-Kraftfahrzeug gemäß Anspruch 2, bei dem:
der zweite Abschnitt des ersten Kabelbaums (SH1) und der zweite Abschnitt des zweiten Kabelbaums (SH2) gemeinsam an einem Abschnitt des Körperrahmens (1X) fixiert sind.

4. Das Sattel-Grätsch-Typ-Kraftfahrzeug gemäß Anspruch 2, bei dem:
der zweite Abschnitt des ersten Kabelbaums (SH1) an einem ersten Fixierabschnitt des Körperrahmens (1X) fixiert ist, der sich in der Fahrzeugbreitenrichtung in Bezug auf die Mitte des Fahrzeughauptkörpers (200) auf einer gegenüberliegenden Seite zu der ersten elektrischen Komponente (42) befindet; und
der zweite Abschnitt des zweiten Kabelbaums (SH2) an einem zweiten Fixierabschnitt des Körperrahmens (1X) fixiert ist, der sich in der Fahrzeugbreitenrichtung in Bezug auf die Mitte des Fahrzeughauptkörpers (200) auf einer gegenüberliegenden Seite zu der zweiten elektrischen Komponente (43) befindet.

5. Das Sattel-Grätsch-Typ-Kraftfahrzeug gemäß einem der Ansprüche 2 bis 4, das ferner folgendes Merkmal aufweist:
einen Schlüsselzylinder (41s), der an dem ersten Kopplungsbauteil (10) vorgesehen ist und an einer Position weiter vorne als obere Enden des Paars aus rechtem und linkem Gabelrohr (104) und zwischen dem Luftführbauteil (8) und dem ersten Kopplungsbauteil (10) positioniert ist, wobei:
der Schlüsselzylinder (41s) in der Fahrzeugbreitenrichtung in Bezug auf eine Mitte des ersten Kopplungsbauteils (10) auf einer gleichen Seite wie die erste elektrische Komponente (42) angeordnet ist,
der erste Kabelbaum (SH1) vor dem Schlüsselzylinder (41s) von der ersten elektrischen Komponente (42) verläuft und zwischen einem Gabelrohr (104), das auf einer gleichen Seite angeordnet ist wie die zweite elektrische Komponente (43), und dem Schlüsselzylinder (41 s) verläuft und zu einem Bereich zwischen dem Paar aus rechtem und linkem Gabelrohr (104) geführt ist,
der zweite Kabelbaum (SH2) zwischen dem Gabelrohr (104), das auf der gleichen Seite angeordnet ist wie die zweite elektrische Komponente (43), und dem Schlüsselzylinder (41s) von der zweiten elektrischen Komponente (43) verläuft und zu einem Bereich zwischen dem Paar aus rechtem und linkem Gabelrohr (104) geführt ist, und
der erste Abschnitt des ersten Kabelbaums (SH1) und der erste Abschnitt des zweiten Kabelbaums (SH2) gemeinsam in der Fahrzeugbreitenrichtung an einer inneren Position des Schlüsselzylinders (41s) an dem ersten Kopplungsbauteil (10) fixiert sind.

6. Das Sattel-Grätsch-Kraftfahrzeug gemäß einem der Ansprüche 2 bis 4, das ferner folgendes Merkmal aufweist:
einen Schlüsselzylinder (41s), der an dem ersten Kopplungsbauteil (10) vorgesehen und an einer Position weiter vorne als obere Enden des Paars aus rechtem und linkem Gabelrohr (104) zwischen dem Luftführbauteil (8) und dem ersten Kopplungsbauteil (10) angeordnet ist, wobei:
der Schlüsselzylinder (41 s) in der Fahrzeugbreitenrichtung an einer Mitte des ersten Kopplungsbauteils (10) angeordnet ist,
der erste Kabelbaum (SH1) zwischen einem Gabelrohr (104), das auf einer gleichen Seite angeordnet ist wie die erste elektrische Komponente (42), und dem Schlüsselzylinder (41s) von der ersten elektrischen Komponente (42) verläuft und zu einem Bereich zwischen dem Paar aus rechtem und linkem Gabelrohr (104) geführt ist,
der zweite Kabelbaum (SH2) zwischen einem Gabelrohr (104), das auf einer gleichen Seite angeordnet ist wie die zweite elektrische Komponente (43), und dem Schlüsselzylinder (41s) von der zweiten elektrischen Komponente (43) verläuft und zu einem Bereich zwischen dem Paar aus rechtem und linkem Gabelrohr (104) geführt ist, und
der erste Abschnitt des ersten Kabelbaums (SH1) und der erste Abschnitt des zweiten Kabelbaums (SH2) gemeinsam an einer Position weiter hinten als der Schlüsselzylinder (41s) an dem ersten Kopplungsbauteil (10) fixiert sind.

7. Das Sattel-Grätsch-Typ-Kraftfahrzeug gemäß einem der Ansprüche 1 bis 6, bei dem:
das Kopfrohr (103) in einer Seitenansicht des Fahrzeugs an einer Position weiter hinten als das Paar aus rechtem und linkem Gabelrohr (104) positioniert ist,
der erste Kabelbaum (SH1) zwischen einem Gabelrohr (104) des Paars aus rechtem und linkem Gabelrohr (104) und dem Kopfrohr (103) von einer Position zwischen dem Paar aus rechtem und linkem Gabelrohr (104) verläuft und in der Fahrzeugbreitenrichtung nach außen geführt ist, und
eine Ausnehmung (120), in der ein Teil des ersten Kabelbaums (SH1) gelagert ist, an dem Kopfrohr (103) gebildet ist.

8. Das Sattel-Grätsch-Typ-Kraftfahrzeug gemäß einem der Ansprüche 1 bis 7, das ferner eine Halterung (50) aufweist, die an dem ersten Kopplungsbauteil (10) befestigt ist, um den ersten Abschnitt des ersten Kabelbaums (SH1) an dem ersten Kopplungsbauteil (10) zu fixieren.

## Revendications

1. Véhicule à moteur de type à selle, comprenant:
un corps principal de véhicule (200) qui comprend un tube de tête (103) et un châssis de carrosserie (1X) s'étendant dans une direction vers l'arrière du véhicule à partir du tube de tête (103);
un premier élément de couplage (10) prévu à une extrémité supérieure du tube de tête (103) de manière à pouvoir tourner par rapport au tube de tête (103);
un deuxième élément de couplage (20) prévu à une extrémité inférieure du tube de tête (103) de manière à pouvoir tourner par rapport au tube de tête (103);
une paire de tubes de fourche droit et gauche (104) supportés par les premier et deuxième éléments de couplage (10, 20) en des positions plus vers l'extérieur dans une direction de la largeur du véhicule et plus en avant dans une direction avant-arrière du véhicule que le tube de tête (103);
une poignée (30L, 30R) prévue au premier élément de couplage (10);
un premier composant électrique (42) prévu au moins à l'une parmi une partie gauche et une partie droite de la poignée (30L, 30R);
un premier faisceau de câblage (SH1) connecté au premier composant électrique (42);
un moteur (3) prévu au châssis de carrosserie (1X); et
un élément de guidage d'air (8) qui est prévu entre la paire de tubes de fourche droit et gauche (104) et entre le premier élément de couplage (10) et le deuxième élément de couplage (20) et qui est configuré pour amener de l'air vers le moteur (3);
**caractérisé par le fait que**
le premier faisceau de câblage (SH1) s'étend du premier composant électrique (42) vers un centre du corps principal de véhicule (200) dans la direction de la largeur du véhicule, passe vers l'arrière dans la direction avant-arrière du véhicule entre l'élément de guidage d'air (8) et le premier élément de couplage (10) et entre la paire de tubes de fourche droit et gauche (104) en vue de face du véhicule, et est par ailleurs conduit vers l'extérieur dans la direction de la largeur du véhicule, une première partie du premier faisceau de câblage (SH1) étant fixée au premier élément de couplage (10) entre la paire de tubes de fourche droit et gauche (104) dans la direction de la largeur du véhicule, et une deuxième partie du premier faisceau de câblage (SH1) étant fixée au corps principal de véhicule (200) en une position plus en arrière que la paire de tubes de fourche droit et gauche (104).

2. Véhicule à moteur de type à selle selon la revendication 1, comprenant par ailleurs:
un deuxième composant électrique (43) prévu au moins à l'autre parmi la partie gauche et la partie droite de la poignée (30L, 30R), de sorte que le deuxième composant électrique (43) soit positionné d'un côté opposé au premier composant électrique (42) par rapport au centre du corps principal de véhicule (200) dans la direction de la largeur du véhicule; et
un deuxième faisceau de câblage (SH2) connecté au deuxième composant électrique (43),
dans lequel
le deuxième faisceau de câblage (SH2) s'étend du deuxième composant électrique (43) vers le centre du corps principal de véhicule (200) dans la direction de la largeur du véhicule, passe vers l'arrière dans la direction avant-arrière du véhicule entre l'élément de guidage d'air (8) et le premier élément de couplage (10) et entre la paire de tubes de fourche droit et gauche (104) en vue de face du véhicule, et est par ailleurs conduit vers l'extérieur dans la direction de la largeur du véhicule, une première partie du deuxième faisceau de câblage (SH2) étant fixée au premier élément de couplage (10) entre la paire de tubes de fourche droit et gauche (104) dans la direction de la largeur du véhicule, et une deuxième partie du deuxième faisceau de câblage (SH2) étant fixée au corps principal de véhicule (200) en une position plus en arrière que la paire de tubes de fourche droit et gauche (104).

3. Véhicule à moteur de type à selle selon la revendication 2, dans lequel
la deuxième partie du premier faisceau de câblage (SH1) et la deuxième partie du deuxième faisceau de câblage (SH2) sont fixées en commun à une partie du châssis de carrosserie (1X).

4. Véhicule à moteur de type à selle selon la revendication 2, dans lequel
la deuxième partie du premier faisceau de câblage (SH1) est fixée à une première partie de fixation du châssis de carrosserie (1X) qui est située d'un côté opposé au premier composant électrique (42) par rapport au centre du corps principal de véhicule (200) dans la direction de la largeur du véhicule, et
la deuxième partie du deuxième faisceau de câblage (SH2) est fixée à une deuxième partie de fixation du châssis de carrosserie (1X) qui est située d'un côté opposé au deuxième composant électrique (43) par rapport au centre du corps principal de véhicule (200) dans la direction de la largeur du véhicule.

5. Véhicule à moteur de type à selle selon l'une quelconque des revendications 2 à 4, comprenant par ailleurs:
un cylindre à clé (41s) prévu au premier élément de couplage (10), destiné à se situer en une position plus en avant que les extrémités supérieures de la paire de tubes de fourche droit et gauche (104) et entre l'élément de guidage d'air (8) et le premier élément de couplage (10),
dans lequel
le cylindre à clé (41 s) est disposé d'un même côté que le premier composant électrique (42) par rapport à un centre du premier élément de couplage (10) dans la direction de la largeur du véhicule,
le premier faisceau de câblage (SH1) passe devant le cylindre à clé (41s) du premier composant électrique (42) et passe entre un tube de fourche (104) disposé d'un même côté que le deuxième composant électrique (43) et le cylindre à clé (41s), et est conduit à une zone située entre la paire de tubes de fourche droit et gauche (104),
le deuxième faisceau de câblage (SH2) passe entre le tube de fourche (104) disposé du même côté que le deuxième composant électrique (43) et le cylindre à clé (41s) du deuxième composant électrique (43) et est conduit vers une zone située entre la paire de tubes de fourche droit et gauche (104), et
la première partie du premier faisceau de câblage (SH1) et la première partie du deuxième faisceau de câblage (SH2) sont fixées en commun au premier élément de couplage (10) en une position intérieure du cylindre à clé (41s) dans la direction de la largeur du véhicule.

6. Véhicule à moteur de type à selle selon l'une quelconque des revendications 2 à 4, comprenant par ailleurs:
un cylindre à clé (41s) prévu au premier élément de couplage (10) destiné à se situer en une position plus en avant que les extrémités supérieures de la paire de tubes de fourche droit et gauche (104) entre l'élément de guidage d'air (8) et le premier élément de couplage (10),
dans lequel
le cylindre à clé (41 s) est disposé au centre du premier élément de couplage (10) dans la direction de la largeur du véhicule,
le premier faisceau de câblage (SH1) passe entre un tube de fourche (104) disposé d'un même côté que le premier composant électrique (42) et le cylindre à clé (41s) du premier composant électrique (42), et est conduit vers une zone située entre la paire de tubes de fourche droit et gauche (104),
le deuxième faisceau de câblage (SH2) passe entre un tube de fourche (104) disposé d'un même côté que le deuxième composant électrique (43) et le cylindre à clé (41s) du deuxième composant électrique (43) et est conduit vers une zone située entre la paire de tubes de fourche droit et gauche (104), et
la première partie du premier faisceau de câblage (SH1) et la première partie du deuxième faisceau de câblage (SH2) sont fixées en commun au premier élément de couplage (10) en une position plus vers l'arrière que le cylindre à clé (41s).

7. Véhicule à moteur de type à selle selon l'une quelconque des revendications 1. à 6, dans lequel
le tube de tête (103) est situé en une position plus en arrière que la paire de tubes de fourche droit et gauche (104) en vue latérale du véhicule,
le premier faisceau de câblage (SH1) passe entre un tube de fourche (104) de la paire de tubes de fourche droit et gauche (104) et le tube de tête (103) à partir d'une position entre la paire de tubes de fourche droit et gauche (104), et est conduit vers l'extérieur dans le sens de la largeur du véhicule, et
un évidement (120) dans lequel est entreposée une partie du premier faisceau de câblage (SH1) est formé dans le tube de tête (103).

8. Véhicule à moteur de type à selle selon l'une quelconque des revendications 1 à 7, comprenant par ailleurs un moyen de fixation (50) qui est monté sur le premier élément de couplage (10) pour fixer la première partie du premier faisceau de câblage (SH1) au premier élément de couplage (10).
